# EUROPÄISCHE PATENTSCHRIFT

(11) **EP 1 285 515 B1**
(45) Veröffentlichungstag und Bekanntmachung des Hinweises auf die Patenterteilung: **15.10.2014**
(21) Anmeldenummer: 01929302.6
(22) Anmeldetag: 30.03.2001
(51) Int. Cl.: H04L 29/06, H04L 12/40, B60R 16/02

(54) **VERFAHREN ZUR ZUGRIFFSSTEUERUNG AUF GERÄTE IN EINEM FAHRZEUGKOMMUNIKATIONSNETZ**
METHOD FOR CONTROLLING ACCESS TO DEVICES IN A VEHICLE COMMUNICATION NETWORK
PROCEDE DE COMMANDE DE L'ACCES A DES DISPOSITIFS DANS UN RESEAU DE COMMUNICATION AUTOMOBILE

(30) Priorität: 16.05.2000 DE 10023705
(43) Veröffentlichungstag der Anmeldung: 26.02.2003
(73) Patentinhaber: ROBERT BOSCH GMBH, 70442 Stuttgart (DE)
(72) Erfinder: VOLLMER, Vasco, 29471 Gartow (DE); HOFMANN, Matthias, 01705 Freital (DE)
(86) Internationale Anmeldenummer: PCT/DE2001/001266
(87) Internationale Veröffentlichungsnummer: WO 2001/089175

(56) Entgegenhaltungen:
- EP-A- 0 814 447
- US-A- 5 957 985
- KIENCKE U ET AL: "OPEN SYSTEMS AND INTERFACES FOR DISTRIBUTED ELECTRONICS IN CARS (OSEK)" SAE TECHNICAL PAPER SERIES,US,SOCIETY OF AUTOMOTIVE ENGINEERS, WARRENDALE, PA, 1995, Seiten 71-78, XP002062366 ISSN: 0148-7191
- MAURY WRIGHT: "Auto electronics for a multimedia future" EDN ACCESS, [Online] 19. August 1999 (1999-08-19), XP002171999 Gefunden im Internet: <URL:http://www.ednmag.com/ednmag/reg/1999 /081999/pdfs/17cs.pdf> [gefunden am 2001-07-13]
- NICOLAS NAVET: "Controller area network - CANs use within automobiles" IEEE POTENTIALS, Oktober 1998 (1998-10) - November 1998 (1998-11), Seiten 12-14, XP002172000
- STZP: "CAN Application Layer (CAL)" STZP, 1996, XP002156915
- BLOKS R H J: "The IEEE-1394 high speed serial bus" PHILIPS JOURNAL OF RESEARCH,ELSEVIER, AMSTERDAM,NL, Bd. 50, Nr. 1, 1996, Seiten 209-216, XP004008212 ISSN: 0165-5817

## Beschreibung

### Stand der Technik

Die Erfindung geht aus von einem Verfahren zur Zugriffssteuerung auf Geräte in einem Fahrzeugkommunikationsnetz.

Es ist bereits bekannt, dass in einem Fahrzeug Fahrzeugkommunikationsnetze verwendet werden, um verschiedene Komponenten aus dem Multimediabereich miteinander zu vernetzen. Ein Benutzer startet eine Applikation auf einem Gerät, die zu ihrer Ausführung weitere Geräte benötigt. Die Geräte, die an das Fahrzeugkommunikationsnetz angeschlossen sind, werden an verschiedenen Orten im Kraftfahrzeug platziert.

Aus der EP-A-0 814 447 ist ein Fahrzeugkommunikationssystem bekannt mit einem Zentralrechner zur Durchführung von Telematik-Applikationen. Die Geräteeinheiten sind den verschiedenen Telematik-Applikationen flexibel steuerbar zugeordnet. Mittels einer Applikationssteuerung können erforderliche Geräteeinheiten funktionsbezogen angewählt werden und die Datenübertragungsvorgänge gesteuert werden. Mit Geräte- und Schnittstellen-Gateways, d.h. in Soft- oder Hardware realisierten Treibereinheiten für die Schnittstellen und daran anschließenden Geräteeinheiten kann die adaptive Applikationssteuerung eingehende Daten in das jeweils ausgangsseitig benötigte Datenformat transformieren, so dass die für die jeweilige Applikation benötigten Geräteeinheiten flexibel über die jeweiligen Schnittstellen angesteuert werden können.

### Vorteile der Erfindung

Das erfindungsgemäße Verfahren zur Zugriffssteuerung auf Geräte in einem Fahrzeugkommunikationsnetz mit den Merkmalen des Patentanspruchs 1 hat demgegenüber den Vorteil, dass der Zugriff auf Geräte, die an das Fahrzeugkommunikationsnetz angeschlossen sind, mittels Prioritäten gesteuert wird. Durch die Systematik des erfindungsgemäßen Verfahrens wird das Zusammenspiel des Treibermanagers und des Ressourcenmanagers und der Applikation geregelt. Die Vergabe von Prioritäten ermöglicht vorteilhafterweise die Reihung von Applikationen nach ihrer Bedeutung. Dadurch ist es möglich, dass einige Applikationen gegenüber anderen Applikationen einen Vorzug bei der Vergabe der Geräte erhalten.

Anspruch 8 zeigt ein erfindungsgemäßes System zur Zugriffssteuerung auf.

Durch die in den abhängigen Ansprüchen aufgeführten Maßnahmen und Weiterbildungen sind vorteilhafte Verbesserungen des im Patentanspruch 1 angegebenen Verfahrens zur Zugriffssteuerung auf Geräte in einem Fahrzeugkommunikationsnetz möglich.

Besonders vorteilhaft ist, dass die von der Applikation angeforderten Geräte der Applikation nur für eine bestimmte Zeit zugewiesen werden. Damit wird vorteilhafterweise erreicht, dass eine Applikation eine Ressource, d.h. ein Gerät, nicht für eine übermäßig lange Zeit beanspruchen kann, wenn andere Applikationen, die mit der gleichen Priorität für Geräte arbeiten, auch ein Zugriff auf diese Geräte benötigen. Dies ermöglicht ein größeres Maß an Faimeß für die verschiedenen Applikationen.

Darüber hinaus ist es von Vorteil, dass eine Applikation, die Geräte mit höherer Priorität anfordert als eine Applikation, die diese Geräte im Moment verwendet, diese Geräte dann zugewiesen bekommt, so dass sich die höhere Priorität durchsetzt. Dies hat insbesondere in Notfallsituationen oder wenn Warnungen an den Fahrer ausgegeben werden sollen, einen entscheidenden Vorteil. Beispielsweise wird eine Verkehrsdurchsage mittels eines Rundfunkempfängers im Fahrzeug empfangen, wobei der Rundfunkempfänger an das Fahrzeugkommunikationsnetz angeschlossen ist, während der Fahrer im Moment mittels eines CD-Spielers sich Musik von einer Compakt-Disc anhört, so dass der CD-Spieler im Moment den Audioverstärker mit dem Lautsprecher als Gerät belegt. Die Verkehrsdurchsage fordert nun jedoch den Audioverstärker mit Lautsprecher mit einer höheren Priorität an, als es der CD-Spieler getan hatte. Daher wird die Applikation, die den CD-Spieler steuert, unterbrochen, so dass der Audioverstärker und der Lautsprecher für die Verkehrsdurchsage bereitstehen.

Darüber hinaus ist es von Vorteil, dass die Applikation einer Applikationsschicht zugeordnet wird, während der Treibermanager dem sogenannten Common Interface for Automotive Networks (CIAN) zugeordnet wird. Damit wird eine vorteilhafte Zuordnung erreicht, die eine standardisierte Schnittstellendefinition zwischen diesen Schichten ermöglicht. Die verschiedenen Applikationen, die der Applikationsschicht zugeordnet sind, greifen in der gleichen Art und Weise auf den Treibermanager zu.

Weiterhin ist es von Vorteil, dass eine Applikation eine weitere Applikation aufrufen kann, die gegebenenfalls auch auf einem anderen Gerät bereitgestellt ist. Treiber und Ressourcen werden entsprechend den beiden Applikationen dann zugeteilt.

Darüber hinaus ist es von Vorteil, dass als Bussystem der IEEE 1394 Bus, auch als Firewall bekannt, verwendet wird. Er ist insbesondere für die Zusammenschaltung von Multimediakomponenten geeignet.

Es ist weiterhin von Vorteil, dass die Treiber entweder bereits auf den Geräten mit den Applikationen abgespeichert sind oder von anderen Geräten wie einer Datenbank geladen werden oder bei Bedarf mittels entsprechender Software und Daten erzeugt werden.

Schließlich ist es auch von Vorteil, dass ein Gerät Mittel aufweist, um als Ressourcenmanager und/oder als Treibermanager zu wirken. Geräte, von denen Applikationen aufgerufen werden, weisen Mittel auf, um das erfindungsgemäße Verfahren durchzuführen.

### Zeichnung

Ausführungsbeispiele der Erfindung sind in der Zeichnung dargestellt und werden in der nachfolgenden Beschreibung näher erläutert. Es zeigt Figur 1 eine Konfiguration eines Fahrzeugskommunikationsnetzes, Figur 2 ein Flußdiagramm des erfindungsgemäßen Verfahrens, Figur 3 die Initialisierung einer Applikation und Figur 4 die Geräte-Zugriffssteuerung.

### Beschreibung

Fahrzeugkommunikationsnetze werden zunehmend in Kraftfahrzeugen eingesetzt, um verschiedene Komponenten aus dem Multimediabereich miteinander zu vernetzen. Zu solchen Komponenten gehören ein Rundfunkempfänger, ein Auto-PC, ein Navigationsgerät, ein Lautsprechersystem und ein CD-Spieler. Ein Benutzer startet nun auf einem Gerät eine Applikation, wobei die Applikation weitere an das Fahrzeugkommunikationsnetz angeschlossene Geräte zur Durchführung benötigt.

Erfindungsgemäß wird daher ein Verfahren zur Zugriffssteuerung auf Geräte in einem Fahrzeugkommunikationsnetz verwendet, wobei eine Applikation eine Liste für die für die Applikation notwendigen Geräte erstellt. Die für die Geräte notwendigen Treiber werden von einem Treibermanager angefordert, der dann die entsprechenden Geräte von einem Ressourcenmanager mit einer von der Applikation definierten Priorität anfordert.

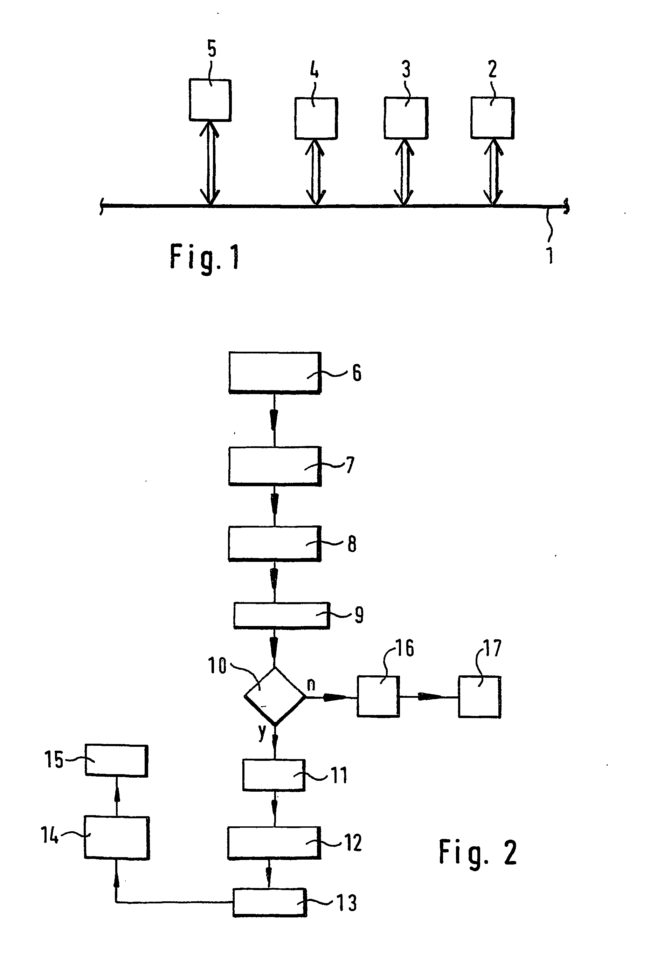

In Figur 1 ist als Blockdiagramm eine Konfiguration eines Fahrzeugkommunikationsnetzes dargestellt. Ein Ressourcenmanager 2, ein Treibermanager 3, ein CD-Spieler 4 und ein Lautsprecher mit Audioverstärker 5 sind über Datenein-/-ausgänge an einen Bus 1 angeschlossen. Alle an den Bus 1 angeschlossenen Komponenten weisen Buscontroller auf, um eine Datenübertragung über den Bus 1 zu ermöglichen. Es können mehr oder weniger Geräte an den Bus 1 angeschlossen werden, als es hier dargestellt ist. Der Bus 1 ist hier ein Bus nach IEEE 1394, es ist jedoch auch möglich, einen MOST-Bus zu verwenden. Wichtig ist allein die Übertragung der Daten über diesen Bus 1, wobei sowohl elektrische Leitungen als auch optische Übertragungsmittel verwendet werden können.

In Figur 2 ist das erfindungsgemäße Verfahren zur Zugriffssteuerung auf Geräte in einem Fahrzeugkommunikationsnetz 1 als Flußdiagramm dargestellt. In Verfahrensschritt 6 wird auf dem Treibermanager 3 von einem Fahrer in einem Fahrzeug, in dem sich das Fahrzeugkommunikationsnetz, der Bus 1 befindet, eine Applikation gestartet. Alternativ ist es möglich, dass der Treibermanager 3 sich auf einem anderen Gerät als die Applikation befindet. Weiterhin ist es möglich, dass jedes Gerät, das eine Applikation aufweist, einen Treibermanager hat.

In Verfahrensschritt 7 erstellt die Applikation auf dem Treibermanager 3 eine Liste der für die Applikation notwendigen Geräte. Die Applikation wird hier beispielhaft auf dem Treibermanager 3 aufgerufen, wobei das Gerät, das den Treibermanager 3 und die Applikation aufweist, auch andere Applikationen bereitstellt.

Alternativ ist es weiterhin möglich, dass die Applikation auf einem anderen Gerät als auf dem Treibermanager 3 aufgerufen wird. Das Gerät, auf dem die Applikation aufgerufen wird, weist eine Verbindung zu einer Eingabevorrichtung auf, die entweder manuell oder sprachgesteuert ist. Mittels dieser Eingabevorrichtung nimmt dann der Fahrer oder ein Beifahrer den Aufruf der Applikation vor.

In Verfahrensschritt 8 weist die Applikation den in der Liste aufgeführten Geräten, die zur Durchführung der Applikation notwendig sind, eine Priorität zu, mit der diese Geräte angefordert werden. Diese Priorität hängt davon ab, welche Bedeutung die Applikation einnimmt. Ist die Applikation beispielsweise eine Verkehrsdurchsage, die automatisch gestartet wird, dann wird diese Applikation und die damit verbundene Anforderung für die notwendigen Geräte eine hohe Priorität erhalten. Auch ein Telefonanruf, wobei dann ein Mobiltelefon an den Bus 1 angeschlossen ist, würde eine hohe Priorität zugewiesen bekommen, um zumindest dem Fahrer gemeldet zu werden. Wiedergaben von Tonträgern, also Applikationen, die alleine zur Unterhaltung bestimmt sind, erhalten eine niedrige Priorität.

Ist ein angefordertes Gerät belegt, dann entscheidet die Priorität, ob die Applikation, die dieses belegte Gerät anfordert das Gerät erhält oder nicht. Ist die Priorität der anfordernden Applikation höher als die der Applikation, die das Gerät bereits belegt hat, dann wird dieses Gerät der Applikation entzogen und der anfordernden Applikation zugewiesen. Ist die Priorität gleich, dann behält die Applikation, die zuerst die Geräte zugewiesen bekam, auch weiterhin die Geräte. Nachdem die belegende Applikation die Geräte wieder freigibt, dann wird die wartende Applikation die Geräte dann übernehmen. Dafür vermerkt der Ressourcenmanager 2 einen Eintrag, um sich die wartende Applikation zu merken. In einer Weiterbildung des erfindungsgemäßen Verfahrens ist es möglich, dass eine Applikation ein Gerät für eine bestimmte Zeit nur erhält, nach der das Gerät einer eventuell wartenden Applikation zugewiesen wird. Liegt keine wartende Applikation vor, dann kann die Applikation, der das Gerät aufgrund der abgelaufenen Zeit entzogen wurde, dieses Gerät erneut anfordern.

In Verfahrensschritt 9 fordert der Treibermanager 3 von dem Ressourcenmanager 2 die in der Liste enthaltenen Geräte an und teilt die entsprechende Priorität mit. In Verfahrensschritt 10 überprüft der Ressourcenmanager 2, ob die Geräte frei sind oder nicht. Sind die Geräte frei, dann wird in Verfahrensschritt 11 die Zuteilung der Geräte durchgeführt, wobei der Ressourcenmanager 2 entsprechende Einträge in seinem Speicher vornimmt, um die Ressourcenverwaltung durchzuführen. Hier hat der Benutzer eine Applikation gestartet, die den CD-Spieler 4 startet. Dafür ist als Gerät auch der Lautsprecher mit Audioverstärker 5 zur akustischen Wiedergabe notwendig. Daher wird der Applikation in Verfahrensschritt 11 der CD-Spieler 4 und der Lautsprecher mit Audioverstärker 5 zugewiesen.

In Verfahrensschritt 12 erfolgt dann der Zugriff durch den Treibermanager 3, der der Applikation die entsprechenden Treiber für den CD-Spieler 4 und den Audioverstärker mit Lautsprecher 5 zuweist. Dann wird die Applikation durchgeführt. In Verfahrensschritt 13 meldet die Applikation ihr Ende, so dass dann in Verfahrensschritt 14 der Treibermanager 3 die belegten Geräte, also der CD-Spieler 4 und der Audioverstärker mit Lautsprecher 5 freigibt. In Verfahrensschritt 15 wird gegebenenfalls eine Rückgabe der Geräte, dem CD-Spieler 4 und dem Audioverstärker 5 mit Lautsprecher, erfolgen, falls vorher eine andere Applikation mit einer niedrigeren Priorität diese Geräte belegt hatte, und demnach wurden diesen Applikationen die Geräte entzogen.

Wurde in Verfahrensschritt 10 festgestellt, dass die von der Applikation angeforderten Geräte nicht frei sind, dann wird in Verfahrensschritt 16 dies der Applikation gemeldet, um dann in Verfahrensschritt 17 die Applikation nicht auszuführen. D.h. die Applikation wird hier unterbrochen, beispielsweise in einen Pause-Modus überführt, um sie dann zu starten, wenn diese Geräte frei sind. Dafür weist der Ressourcenmanager 2 einen Eintrag auf, dass die Applikation, die auf dem Treibermanager 3 gestartet wurde, diese Geräte angefordert hat, d.h. es wird eine Warteliste korrigiert. Alternativ ist es hier möglich, dass ein Benutzer eine Rückmeldung bekommt, dass die Applikation momentan nicht ausführbar ist und dass der Benutzer die Applikation dann terminiert und dann selber später gegebenenfalls auf Wunsch erneut startet.

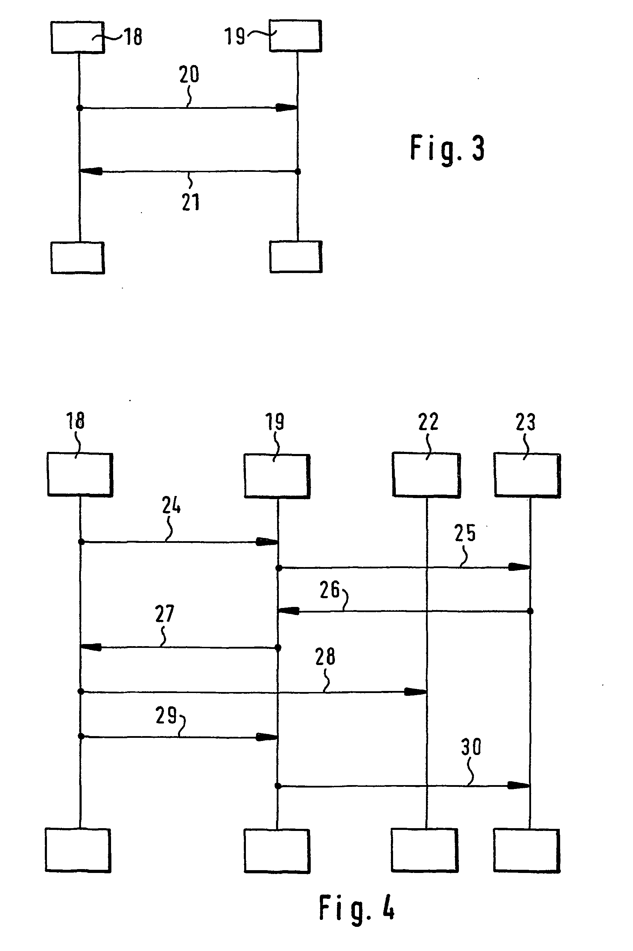

In Figur 3 ist die Initialisierung einer Applikation in einem Zeitdiagramm dargestellt. Die Applikation 18 sendet zu dem Treibermanager 19 eine Anfrage 20, welche Geräte verfügbar sind und welche Eigenschaften die entsprechenden Treiber aufweisen. Die Applikation erkennt daraufhin, ob sie überhaupt ausführbar ist. Denn mit der Meldung 21 erhält die Applikation 18 von dem Treibermanager diese notwendigen Informationen, so dass nur ein gezielter Zugriff auf die entsprechenden Geräte mit den gerätespezifischen Treibern ermöglicht wird.

In Figur 4 ist als Ablaufdiagramm eine Gerätezugriffsteuerung, die erfolgreich ist, dargestellt. Die hier beschriebenen Meldungen werden über das Fahrzeugkommunikationsnetz übertragen. Die Applikation 18 sendet die von ihr erzeugte Liste der Geräte mit den Gerätenummern und den entsprechenden Geräten an den Treibermanager 19. Dies geschieht mit der Meldung 24. Daraufhin sendet der Treibermanager 19 dem Ressourcenmanager 23 die Meldung 25, die anhand der Geräteidentifikationsnummern und der entsprechenden Prioritäten anfragt, ob diese Geräte verfügbar sind. Mit der Meldung 26 beantwortet der Ressourcenmanger 23 dem Treibermanager 19 diese Anfrage positiv. Daraufhin sendet der Treibermanager 19 mit der Meldung 27 der Applikation 18 die Meldung, dass die Geräte verfügbar sind mit den entsprechenden Identifikationsnummern und die entsprechende Identifikationsnummer der Treiber für diese Geräte, so dass die Applikation dann den Zugriff starten kann.

Mittels der Meldung 28 greift dann die Applikation 18 auf die Treiber 22 zu, um die zugeteilten Geräte zu steuern. Nachdem die Applikation beendet wurde, sendet sie die Meldung 29 an den Treibermanager 19, um dies dem Treibermanager mitzuteilen. Dabei werden wiederum dem Treibermanager die entsprechenden Gerätenummern mitgeteilt. Der Treibermanager 19 teilt dann mit der Meldung 30 dem Ressourcenmanager mit, dass die Geräte mit den entsprechenden Identifikationsnummern wieder freigegeben werden.

Eine Applikation kann mit dem erfindungsgemäßen Verfahren auch eine weitere Applikation aufrufen, wobei beide dann gegebenenfalls Listen erstellen, um entsprechende Geräte anzufordern. Eine Applikation wird dabei natürlich nur eine solche Applikation aufrufen, die nicht die gleichen Geräte anfordert, da sonst ein Konflikt entstehen würde. Der Treibermanager 19 weist eine Applikation entweder Identifikationsnummern für Treiber zu, die bereits auf dem Gerät der Applikation abgespeichert sind oder der Treibermanager 19 erzeugt bei Bedarf diese Treiber mittels entsprechender Software oder, der Treibermanager 19 lädt die Treiber von einer Datenbank, die zentral diese Treiber verwaltet.

Wenigstens ein Gerät weist Mittel, Prozessor und Speicher, auf, um den Ressourcenmanager auszuführen. Ein weiteres Gerät weist Mittel, Prozessor und Speicher, auf, um die Ausführbarkeit des Treibermanagers zu gewährleisten. Geräte, auf denen die Applikationen aufgerufen werden, weisen Mittel auf, so dass den Anforderungen Prioritäten gemäß der Applikation zugewiesen werden.

Die Applikationen werden einer Applikationsschicht zugeordnet, während der Treibermanager der Common Interface Automotive Network-Schicht (CIAN) zugeordnet wird. Die Applikationsschicht ist auf der CIAN-Schicht aufgesetzt. Dies ermöglicht eine Schnittstellenstandardisierung. Die Applikationen greifen über die gleiche Schnittstelle auf den Treibermanager zu.

## Patentansprüche

1. Verfahren zur Zugriffssteuerung auf Geräte (4, 5) in einem Fahrzeugkommunikationsnetz, wobei die Geräte an verschiedenen Orten im Fahrzeug plaziert werden, wobei auf den jeweiligen Geräten im Fahrzeugkommunikationsnetz (1) Applikationen zum Abruf bereitgestellt werden, wobei bei Aufruf einer Applikation auf einem Gerät (4, 5) von der Applikation eine Liste mit den für die Applikation notwendigen Geräten erstellt wird, dass von einem die für die Applikation notwendigen Treiber verwaltenden Treibermanager (3) die notwendigen Geräte (4, 5) von einem Ressourcenmanager (2) mit einer von der Applikation definierten Priorität angefordert werden, wobei die von der Applikation erstellte Liste verwendet wird, dass der Ressourcenmanager (2) die notwendigen Geräte (4, 5) dem Treibermanager (3) zuteilt, falls die für die Applikation notwendigen Geräte (4, 5) frei sind, dass der Treibermanager (3) der Applikation den Zugriff auf die notwendigen Geräte (4, 5) mittels der jeweiligen Treiber ermöglicht, dass nach Ende der Applikation dem Ressourcenmanager (2) von dem Treibermanager (3) die für die Applikation notwendigen Geräte (4, 5) als frei gemeldet werden und dass, falls die notwendigen Geräte (4, 5) nicht frei sind, dies dem Treibermanager (3) von dem Ressourcenmanger (2) mitgeteilt wird und dass ein von einer ersten Applikation belegtes Gerät (4, 5) mit einer ersten Priorität einer zweiten Applikation zugeteilt wird, falls die Priorität der zweiten Applikation höher als die erste Priorität ist.

2. Verfahren nach Anspruch 1, **dadurch gekennzeichnet, dass** der Ressourcenmanager (2) die von der Applikation angeforderten Geräte (4, 5) nach einer vorgegebenen Zeit der Applikation entzieht.

3. Verfahren nach Anspruch 1 oder 2, **dadurch gekennzeichnet, dass** die Applikation einer Applikationsschicht und der Treibermanager (3) dem Common Interface for Automotive Networks (CIAN) zugeordnet wird.

4. Verfahren nach einem der vorhergehenden Ansprüche, **dadurch gekennzeichnet, dass** eine Applikation eine weitere Applikation aufruft.

5. Verfahren nach Anspruch 4, **dadurch gekennzeichnet, dass** die weitere Applikation auf einem weiteren Gerät (4, 5) bereitgestellt wird.

6. Verfahren nach einem der vorhergehenden Ansprüche, **dadurch gekennzeichnet, dass** als das Fahrzeugkommunikationsnetz ein Bussystem nach IEEE 1394 verwendet wird.

7. Verfahren nach einem der vorhergehenden Ansprüche, **dadurch gekennzeichnet, dass** die Treiber auf dem Gerät (4, 5) der Applikation gespeichert sind oder bei Bedarf von dem Treibermanager (3) erzeugt werden oder von dem Treibermanager (3) von einem weiteren Gerät (4, 5) geladen werden.

8. System zur Zugriffssteuerung auf Geräte (4, 5) in einem Fahrzeugkommunikationsnetz, wobei die Geräte an verschiedenen Orten im Fahrzeug plaziert sind, wobei auf den jeweiligen Geräten im Fahrzeugkommunikationsnetz (1) Applikationen zum Abruf bereitgestellt werden, wobei die Geräte eingerichtet sind bei Aufruf einer Applikation auf einem Gerät (4, 5) von der Applikation eine Liste mit den für die Applikation notwendigen Geräten zu erstellen von einem die für die Applikation notwendigen Treiber verwaltenden Treibermanager (3) die notwendigen Geräte (4, 5) von einem Ressourcenmanager (2) mit einer von der Applikation definierten Priorität anzufordern, wobei die von der Applikation erstellte Liste verwendet wird, wobei der Ressourcenmanager (2) eingerichtet ist die notwendigen Geräte (4, 5) dem Treibermanager (3) zuzuteilen, falls die für die Applikation notwendigen Geräte (4, 5) frei sind, dass der Treibermanager (3) eingerichtet ist der Applikation den Zugriff auf die notwendigen Geräte (4, 5) mittels der jeweiligen Treiber zu ermöglichen, wobei der Treibermanager (3) so eingerichtet ist, dass nach Ende der Applikation dem Ressourcenmanager (2) von dem Treibermanager (3) die für die Applikation notwendigen Geräte (4, 5) als frei gemeldet werden und wobei der Ressourcenmanager (2) eingerichtet ist, falls die notwendigen Geräte (4, 5) nicht frei sind, dies dem Treibermanager (3) mitzuteilen und wobei der Ressourcenmanager (2) eingerichtet ist ein von einer ersten Applikation belegtes Gerät (4, 5) mit einer ersten Priorität einer zweiten Applikation zuzuteilen, falls die Priorität der zweiten Applikation höher als die erste Priorität ist.

## Claims

1. Method for controlling access to appliances (4, 5) in a vehicle communication network, wherein the appliances are placed at various locations in the vehicle, wherein applications are provided on the respective appliances in the vehicle communication network (1) for retrieval, wherein, when an application is called on an appliance (4, 5), the application creates a list containing the appliances that are necessary for the application, wherein a driver manager (3) managing the drivers that are necessary for the application requests the necessary appliances (4, 5) from a resource manager (2) with a priority that is defined by the application, wherein the list created by the application is used, wherein the resource manager (2) allocates the necessary appliances (4, 5) to the driver manager (3) if the appliances (4, 5) that are necessary for the application are free, wherein the driver manager (3) allows the application to access the necessary appliances (4, 5) by means of the respective drivers, wherein the end of the application is followed by the driver manager (3) reporting the appliances (4, 5) that are necessary for the application to the resource manager (2) as free, and, wherein, if the necessary appliances (4, 5) are not free, this is communicated to the driver manager (3) by the resource manager (2) and wherein an appliance (4, 5) being used by a first application is allocated to a second application with a first priority if the priority of the second application is higher than the first priority.

2. Method according to Claim 1, **characterized in that** the resource manager (2) withdraws the appliances (4, 5) requested by the application from the application after a prescribed time.

3. Method according to Claim 1 or 2, **characterized in that** the application is assigned to an application layer and the driver manager (3) is assigned to the Common Interface for Automotive Networks (CIAN).

4. Method according to one of the preceding claims, **characterized in that** an application calls a further application.

5. Method according to Claim 4, **characterized in that** the further application is provided on a further appliance (4, 5).

6. Method according to one of the preceding claims, **characterized in that** the vehicle communication network used is a bus system based on IEEE 1394.

7. Method according to one of the preceding claims, **characterized in that** the drivers are stored on the appliance (4, 5) of the application or are produced by the driver manager (3) as required or are loaded from a further appliance (4, 5) by the driver manager (3).

8. System for controlling access to appliances (4, 5) in a vehicle communication network, wherein the appliances have been placed at various locations in the vehicle, wherein applications are provided on the respective appliances in the vehicle communication network (1) for retrieval, wherein the appliances are set up so that, when an application is called on an appliance (4, 5), the application creates a list containing the appliances that are necessary for the application and a driver manager (3) managing the drivers that are necessary for the application requests the necessary appliances (4, 5) from a resource manager (2) with a priority that is defined by the application, wherein the list created by the application is used, wherein the resource manager (2) is set up to allocate the necessary appliances (4, 5) to the driver manager (3) if the appliances (4, 5) that are necessary for the application are free, wherein the driver manager (3) is set up to allow the application to access the necessary appliances (4, 5) by means of the respective drivers, wherein the driver manager (3) is set up so that the end of the application is followed by the driver manager (3) reporting the appliances (4, 5) that are necessary for the application to the resource manager (2) as free and wherein the resource manager (2) is set up so that, if the necessary appliances (4, 5) are not free, it communicates this to the driver manager (3) and wherein the resource manager (2) is set up to allocate an appliance (4, 5) being used by a first application to a second application with a first priority if the priority of the second application is higher than the first priority.

## Revendications

1. Procédé de commande de l'accès à des appareils (4, 5) dans un réseau de communication de véhicule, dans lequel les appareils sont placés en différents endroits du véhicule, dans lequel des applications sont fournies pour être appelées sur les appareils respectifs dans le réseau de communication de véhicule (1), dans lequel, lors de l'appel d'une application sur un appareil (4, 5), une liste comportant les appareils nécessaires à l'application est créée par l'application, dans lequel les appareils (4, 5) nécessaires sont demandés à un gestionnaire de ressources (2) avec une priorité définie par l'application, par un gestionnaire de pilotes (3) gérant les pilotes nécessaires à l'application, dans lequel la liste créée par l'application est utilisée, dans lequel le gestionnaire de ressources (2) alloue au gestionnaire de pilotes (3) les appareils (4, 5) nécessaires, dans le cas où les appareils (4, 5) nécessaires à l'application sont disponibles, dans lequel le gestionnaire de pilotes (3) permet à l'application d'accéder aux appareils (4, 5) nécessaires au moyen des pilotes respectifs, dans lequel, après la fin de l'application, les appareils (4, 5) nécessaires à l'application sont signalés comme étant disponibles au gestionnaire de ressources (2) par le gestionnaire de pilotes (3), et dans lequel, dans le cas où les appareils nécessaires (4, 5) ne sont pas disponibles, cela est signalé au gestionnaire de pilotes (3) par le gestionnaire de ressources (2), et dans lequel une première priorité d'une seconde application est allouée à un appareil (4, 5) occupé par une première application, dans le cas où la priorité de la seconde application est supérieure à la première priorité.

2. Procédé selon la revendication 1, **caractérisé en ce que** le gestionnaire de ressources (2) retire à l'application les appareils (4, 5) demandés par l'application au bout d'un temps prédéterminé.

3. Procédé selon la revendication 1 ou 2, **caractérisé en ce que** l'application est affectée à une couche d'application et **en ce que** le gestionnaire de pilotes (3) est affecté à l'interface de type Common Interface for Automotive Networks (CIAN).

4. Procédé selon l'une quelconque des revendications précédentes, **caractérisé en ce qu'**une application appelle une autre application.

5. Procédé selon la revendication 4, **caractérisé en ce que** l'autre application est fournie sur un autre appareil (4, 5).

6. Procédé selon l'une quelconque des revendications précédentes, **caractérisé en ce qu'**on utilise en tant que réseau de communication de véhicule un système de bus conforme à la norme IEEE 1394.

7. Procédé selon l'une quelconque des revendications précédentes, **caractérisé en ce que** les pilotes sont stockés sur l'appareil (4, 5) de l'application ou sont générés lors de l'utilisation par le gestionnaire de pilotes (3) ou sont chargés par le gestionnaire de pilotes (3) depuis un autre appareil (4, 5)

8. Système de commande de l'accès à des appareils (4, 5) dans un réseau de communication de véhicule, dans lequel les appareils sont placés en différents endroits du véhicule, dans lequel des applications sont fournies en vue d'être appelées sur les appareils respectifs dans le réseau de communication de véhicule (1), dans lequel les appareils sont conçus pour créer au moyen de l'application, lors de l'appel d'une application sur un appareil (4, 5), une liste comportant les appareils nécessaires à l'application et pour demander à un gestionnaire de pilotes (3) gérant les pilotes nécessaires à l'application, les appareils (4, 5) nécessaires d'un gestionnaire de ressources (2) avec une priorité définie par l'application, dans lequel la liste créée par l'application est utilisée, dans lequel le gestionnaire de ressources (2) est conçu pour allouer les appareils (4, 5) nécessaires au gestionnaire de pilotes (3) dans le cas où les appareils (4, 5) nécessaires à l'application sont disponibles, dans lequel le gestionnaire de pilotes (3) est conçu pour permettre à l'application d'accéder aux appareils (4, 5) nécessaires au moyen des pilotes respectifs, dans lequel le gestionnaire de pilotes (3) est conçu de manière à ce que, après la fin de l'application, les appareils (4, 5) nécessaires à l'application soient signalés au gestionnaire de ressources (2) par le gestionnaire de pilotes (3) comme étant disponibles, et dans lequel le gestionnaire de ressources (2) est conçu, dans le cas où les appareils (4, 5) nécessaires à l'application ne sont pas disponibles, pour signaler cela au gestionnaire de pilotes (3), et dans lequel le gestionnaire de ressources (2) est conçu pour allouer une première priorité d'une seconde application à un appareil (4, 5) occupé par une première application dans le cas où la priorité de la seconde application est supérieure à la première priorité.
